# EUROPEAN PATENT SPECIFICATION

(11) **EP 1 081 058 B1**
(45) Date of publication and mention of the grant of the patent: **01.12.2004**
(21) Application number: 00306568.7
(22) Date of filing: 02.08.2000
(51) Int. Cl.: B65D 41/02, B29C 43/20, C08K 3/34

(54) **Multi-layer plastic closure with barrier properties and manufacturing method**
Mehrschichtiger Kunstoffverschluss mit Barriereeigenschaften und Herstellungsverfahren
Fermeture multicouche en matière plastique ayant des propriétés de barrière et procédé de fabrication

(30) Priority: 01.09.1999 US 388113
(43) Date of publication of application: 07.03.2001
(60) Divisional application: 03078949.9
(73) Proprietor: OWENS-ILLINOIS CLOSURE INC.,, Toledo Ohio 43666 (US)
(72) Inventor: Riffer, David B., Perrysburg, OH 43551 (US)
(74) Representative: Mercer, Christopher Paul

(56) References cited:
- EP-A- 0 211 649
- EP-A- 0 641 825
- EP-A- 0 853 096
- EP-A- 0 926 078
- WO-A-95/12631

## Description

The present invention is directed to plastic closures for beverage, food, juice, pharmaceutical and like applications, and more particularly to an improved process for manufacturing closures resistant to transmission of gases, water vapor and/or flavorants (flavor scalping).

### Background and Objects of the Invention

It is conventional practice to provide a plastic closure for a container that comprises a base wall and a peripheral skirt with internal means, such as an internal thread, for fastening the closure to a container finish. A flange or lip may extend inwardly from the closure base wall for sealing engagement with the container finish, as disclosed for example in U.S. Patent 5,320,236. Alternatively, a liner may be positioned on the interior surface of the closure base wall for sealing engagement with the container finish. For example, U.S. Patent 4,984,703 discloses a plastic closure with a sealing liner compression molded in situ onto the interior of the cap base. The sealing liner comprises a blend of ethylene vinyl acetate (EVA) and a thermoplastic elastomeric material such as olefin or styrene-butadiene-styrene. U.S. Patent 5,451,360 discloses a method and apparatus for compression molding the liner in situ within the closure bodies.

Although the closures and methods of manufacture disclosed in the noted patents address problems theretofore extant in the art, further improvements remain desirable. For example, although the closure lip or liner provides good sealing against the container finish when the closure is fastened to the container, the closure body and/or liner typical in the prior art does not provide an acceptable barrier against transmission of gases, such as oxygen and carbon dioxide, that can deleteriously affect the product within the container. It has heretofore been proposed to employ a barrier material such as ethylene vinyl alcohol (EVOH) as a transmission barrier material in the liner or the closure body. However, materials of this character tend to be expensive and brittle, and are not well suited to function as a seal. Furthermore, processes for incorporation of such barrier materials in the closures and/or liners of the prior art tend to be unduly expensive, incorporating multiple process steps and/or components.

It is therefore a general object of the present invention to provide a plastic closure, with or without a liner, that combines the functions of a seal for engagement with the container sealing surface and an improved barrier against gas transmission, flavor loss (flavor scalping) and/or water vapor permeation. Another and more specific object of the present invention is to provide a closure of the described character that is of readily moldable and inexpensive composition. Yet another object of the present invention is to provide a method of fabricating such a closure. A further object of the present invention is to provide a closure, and a method of manufacture, that produces a decorative random swirl pattern or effect in the closure body, which may be of differing colors for enhanced decorative effect.

EP-A-0 853 096 discloses a plastic closure of the type set forth in the preamble of the accompanying claim 1, and a method of making a plastic closure of the type set forth in the preamble of the accompanying claim 20.

### Summary of the Invention

In order to meet the afore mentioned objects, there is provided a plastic closure that comprises a closure body having a base wall and a peripheral skirt with means for securing the closure to a container in accordance with claim 1 and a method in accordance with claim 20.

At least the base wall of the closure body consists essentially of a multiplicity of layers of a matrix polymer material alternating with a multiplicity of layers of barrier polymer material that resists transmission of gases, water vapour and flavorants.

Further aspects of the invention are set forth in dependent claims 2 to 19. For example, a compatibilizer preferably is included to promote adhesive bonding between materials of different polarities. A lubricant may also be included to achieve desired removal torque.

The "matrix" polymer material is a thermoplastic polymer. Typical thermoplastic polymers used for the closure body are those classified as polyolefins, polyesters, polyamides and styrenic based polymers. Two major classes of polyolefin polymers used for the closure body are polyethylene and polypropylene. Polyethylene polymers can be classified as high density, medium density and low density homopolymers, or high density, medium density, low density and liner lower density copolymers, in which the comonomer is usually one or more of the family of 1-alkene molecules such as 1-butene, 1-hexene, 1-octene or similar liner alkenes, or cyclic alkenes such as norborene. Examples of polyethylenes are Paxon's AD60-007 high density homopolymer, Phillips 66's MARLEX C590 high density copolymer with hexene comonomer, or Phillips 66's MARLEX 5502BN high density copolymer with hexene comonomer. Ticona's TOPAS 6007 is a copolymer of ethylene and norborene monomers, and is also known in the art as a cyclic olefin copolymer (COC). Blends of the above classes of polyethylenes can also be utilized. Polypropylene polymers used for the closure body can be those classified as homopolymers, random copolymers and impact modified copolymers, or blends of various classes of polypropylenes can be used. Ethylene is typically the comonomer for random polypropylene copolymers and polypropylene impact copolymers, usually incorporating a tough rubber-like discontinuous phase such as ethylene-propylene rubber that can either be polymerized in-situ or in a series of polymerization reactors, or can be physically incorporated in a post-reactor processing step. Examples of polypropylene polymers are Phillips-Sumika's MARLEX HGH020-06 or HBL050-01 homopolymer, Fina's EOD95-10 random copolymer or Montell's PRO-FAX SB-912 random copolymer, and Montell's PRO-FAX 7523 impact copolymer. Blends of the aforementioned classes of polyethylenes and polypropylenes can also be utilized.

Polyesters used for the closure body can be either amorphous or semi-crystalline. Typical semi-crystalline polyesters are poly(ethylene terephthalate) and poly(butylene terephthalate). Likewise, polyesters can be glycol-modified or incorporate other comonomers such as cyclohexylenedimethylol (CHDM) and be rendered amorphous. There are two general classes of polyamides which can be used for the closure shell: those polymerized by condensation of a dibasic acid and a diamine, such as nylon 6,6 and nylon 6,12, and those polymerized by addition reaction of ring compounds that contain both acid and amine groups on the monomer, such as nylon-6, nylon-11, and nylon-12. The polyamides can also be either amorphous or semicrystalline, either of which classes can be used for the closure body. Typical classes of styrenic based polymers that can be used for the closure body may be characterized as polystyrene incorporating various comonomers such as acrylonitrile, butadiene, chlorinated ethylene, ethylene or maleic anyhdride. Examples of these various styrenic copolymers and terpolymers are: ABS, a terpolymer of acrylonitrile, butadiene and styrene; ACS, a terpolymer of acrylonitrile, chlorinated polyethylene and styrene; ASA, a terpolymer of various acrylic monomers, styrene and acrylonitrile; and SAN, a copolymer of styrene and acrylonitrile.

A "compatibilizer" is a thermoplastic that ties two other thermoplastics together by a reactive or chemical (covalent, dipole-dipole, ionic or acid-base) bond or by a non-reactive (chain entanglement) means. Examples include maleic anhydride grafted polymers or ethylene vinyl acetate grafted polymers such as Quantum Chemical's PLEXAR (trademark), Mitsui Petrochemical's ADMER (trademark) and DuPont's BYNEL (trademark) product lines, ethylene methyl acrylate, and ionomers.

A "barrier polymer material" is a thermoplastic material that has a low gas and/or water vapor transmission rate and a high barrier to odorants and essential oils. The barrier properties may be either active or passive, or both. Passive barriers include: EVOH (ethylene vinyl alcohol) such as Nippon Goshei's SOARNOL product line and Evalca's EVAL product line, nylons such as DuPont's SELAR PA, EMS's G21 and Mitsubishi Gas' MXD6 product lines, British Petroleum's BAREX acrylonitrile product line, blends of EVOH and semicrystalline or amorphous nylon, blends of EVOH and an ionomer such as SURLYN (DuPont), polypropylene/butyl rubber such as TREFSIN (Advanced Elastomer Systems) and cyclic olefin copolymers such as marketed by Ticona. Other suitable passive barrier materials are blends as disclosed in U.S. Patent Nos. 4,977,004 and 5,064,716, nanocomposites of montmorillonite (e.g., smectite) clay in EVOH and/or amorphous or semi-crystalline nylon (see U.S. Patents 4,472,538 and 5,552,469), and layered crystalline polymers such as VECTRA by Ticona. Active barrier materials include polymers used for oxygen scavenging such as nylon blended with a cobalt salt.

The closure of the present invention may be of the linerless or self-sealing type that includes integral means, such as an annular lip on the closure base wall or skirt, for sealing engagement with the finish of a container. Alternatively, the closure may include a separate liner carried by the closure base wall for sealing engagement with the container finish. It is currently preferred that the sealing element -- i.e., either the integral sealing lip or the sealing liner -- also include an additive for reducing the coefficient of friction between the closure and the sealing surface of the container. Friction reducing additives include metal stearates, microcrystalline waxes, polyethylene glycols, fatty acid esters and amides. These are known as "lubricants" in the art. The preferred lubricant is a low molecular weight fatty acid amide material that blooms to the exposed surface of the polymer material upon cooling from the melt state, thereby reducing the coefficient of friction between the closure sealing element and the container sealing surface. Examples are: primary amides with the general chemical structure R-CO-NH2, where R is an alkyl group; secondary amides with the general chemical structure R-CO-NH-R'; where R, R' are alkyl groups; secondary bis-amides with the general chemical structure R-CO-NH-A-NH-CO-R', where R, R' are alkyl groups and A is an alkylene group; and blends of the above materials such as in U.S. Patent 5,306,542. The lubricant preferably comprises about 0.1% to 1.5% of the total closure or liner composition by weight, most preferably about 0.5% by weight. The lubricant is preferably compounded into the matrix polymer material (along with any desired colorants) by the material manufacturer. When incorporated into the closure, the amount of lubricant and/or colorant is not included in the calculations of compositions in this application. The barrier material in the closure preferably is an amount in the range of about 2% to 50% by weight. The barrier material most preferably is provided in an amount in the range of about 6% to 35% by weight in the closure body, the compatibilizer material preferably is in the range of about 1% to 20% by weight, the balance consisting of the matrix polymer.

Further aspects of the invention are as set forth in dependent claims 21 to 26. For example, the layers in the pellet preferably are co-extruded from inputs of barrier material, matrix polymer and compatibilizer. These materials may be separately extruded, or the compatibilizer may be mixed with the barrier material, the matrix polymer or both prior to extrusion. In the preferred implementation of the invention, the layers in the pellet are coextruded from a first input consisting of barrier material, a second input consisting of a matrix polymer and a third input consisting of a compatibilizer material that promotes adhesion between the barrier and matrix layers.

### Brief Description of the Drawings

The invention, together with additional objects, features and advantages thereof, will be best understood from the following description, the appended claims and the accompanying drawings in which:
FIG. 1 is a functional block diagram of a process for fabricating compression mold charge pellets in accordance with a presently preferred embodiment of the invention;
FIG. 2 is a view similar to that of FIG. 1 but showing a modified process;
FIG. 3 is a sectioned elevational view on an enlarged scale of a plastic closure fabricated in accordance with the preferred embodiments of the invention illustrated in FIGS. 1 and 2;
FIG. 4 is an enlarged sectional view of the portion of FIG. 3 within the circle 4;
FIGS. 5, 6 and 7 are views similar to that of FIG. 3 but showing modified embodiments of the closure incorporating a sealing liner; and
FIGS. 8 and 9 are fragmentary views similar to FIG. 4 but showing modified embodiments of the invention.

### Detailed Description of Preferred Embodiments

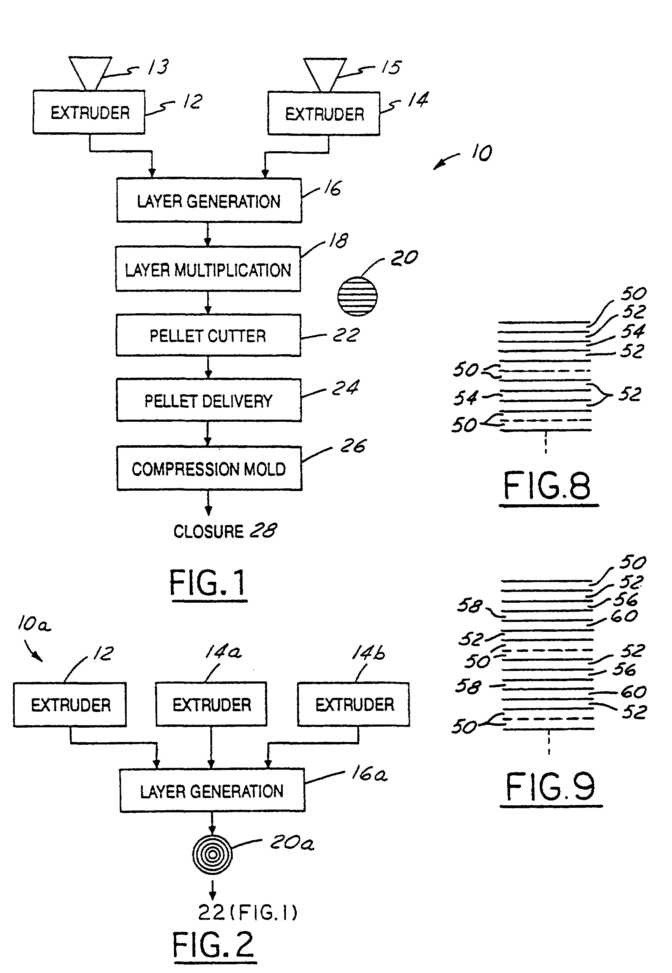

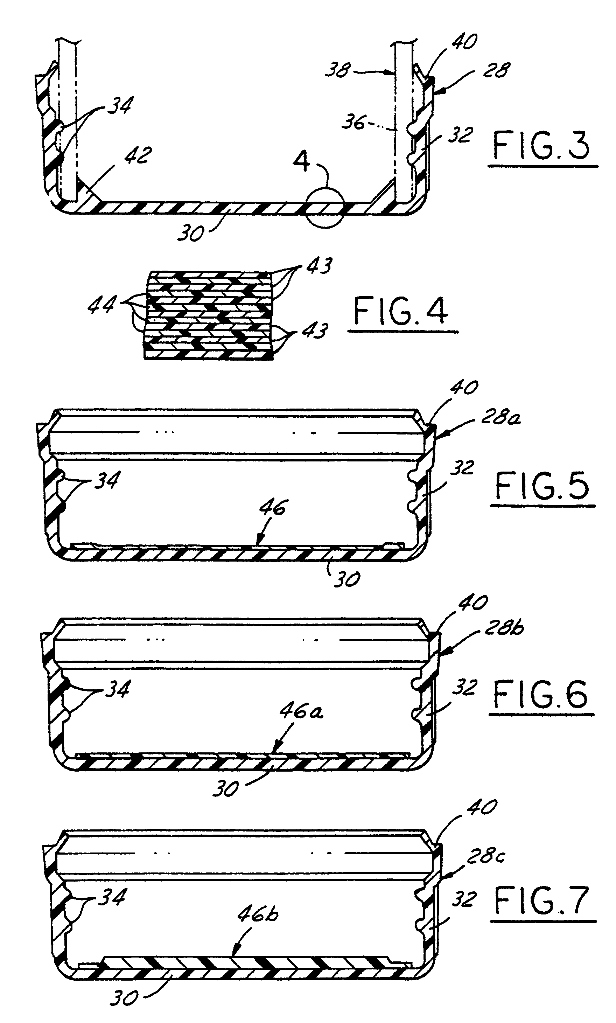

FIG. 1 illustrates a system 10 in accordance with one implementation of the invention as comprising a pair of extruders 12, 14 each having an associated mixing hopper 13, 15. Extruders 12, 14 direct extrudate as first and second inputs to a layer generation device 16. Layer generation device 16 forms the respective inputs into discrete generally parallel layers, and feeds the parallel layers to a layer multiplication device 18. The output of layer multiplication device 18 is an extruded rod from which discrete charge pellets 20 are cut at 22. Pellet 20 has parallel (planar, spiral or concentric) essentially discrete alternating layers, each layer consisting of one of the input materials to layer generator 16 from extruders 12, 14. The number of layers in pellet 20 is a function of the number of stages and the construction of each stage in layer multiplication device 18. In one presently preferred implementation of the invention, layer generation device 16 and layer multiplication device 18 are as disclosed in U.S. Patent Nos. 5,094,793 and 5,628,950. Charge pellets 20 are delivered at 24 to a compression molding device 26, from which completed closures 28 (FIGS. 1 and 3) are delivered. Pellet cutter 22 and pellet delivery system 24 may be as disclosed in U.S. Patents 5,603,964 and 5,286,971. Compression mold 26 may be as disclosed in U.S. Patents 5,451,360 and 5,554,327.

FIG. 2 illustrates a presently preferred system 10a, in which the barrier polymer, the matrix polymer and the compatibilizer are fed from associated separate extruders 12, 14a, 14b to a conventional coextrusion device 16a. The resulting pellet 20a has multiple flat, spiral or coaxial layers. In a three-input system configuration as in FIG. 2, the layers of compatibilizer will be thin and disposed between each sequential layer of barrier material and matrix polymer. The system of FIG. 2 is currently preferred because less compatibilizer is employed. Suitable conventional coextrusion devices 16a are disclosed, for example, in U.S. Patent 4,522,775, and in the background discussion of U.S. Patent 5,628,950. As another modification to the embodiment of FIG. 1, barrier material can be added to the matrix polymer and compatibilizer input to extruder 14. For example, the input to extruder 14 may consist of 10% EVOH, 10% compatibilizer and 80% matrix polymer such as PP, all by weight. Extruder 12 is operated at a lower rate so that total composition remains within the ranges discussed above. Disposition of some barrier material within the thermoplastic elastomer layers further enhances the barrier properties of the material. FIG. 2 also shows a modification in which layer generation device 16a directly feeds pallet cutter 22.

For manufacture of plastic closures in accordance with the system of FIG. 1, the input to extruder 12 at hopper 13 preferably consists of one or more barrier polymers, while the input to extruder 14 at hopper 15 preferably consists essentially of one or more matrix polymers (e.g., PP) and a compatibilizer material. The matrix polymer preferably is pre-blended with lubricant and any desired colorants. The input materials are thoroughly mixed and blended in hopper 15. The barrier polymer input to extruder 12 preferably is one or more passive high gas barrier plastic resins selected from the group consisting of EVOH, nylon, acrylonitrile copolymers such as styrene acrylonitrile and acrylonitrile methylacrylate, blends of EVOH and amorphous nylon, nanocomposites of clay in EVOH or nylon, blends of EVOH and an ionomer, acrylonitrile, cyclic olefin copolymers, and blends thereof. Alternatively, or in addition to the passive barrier resin, the input to extruder 12 may comprise an active oxygen scavenging barrier polymer, such as nylon blended with a cobalt salt. The matrix polymer input to extruder 14 preferably is selected from the group consisting of polyolefins, polyesters, polyamides and styrene-based polymers. Polypropylene resins are particularly preferred. The compatibilizer input to extruder 14 preferably is selected from the group consisting of maleic anhydride grafted polymers, ethylene vinyl acetate grafted polymers, ethylene methyl acrylate, ionomers, carboxylic acid grafted or modified polymers, and blends thereof. As noted above, a lubricant selected from the group consisting of fatty acid esters, glycols, waxes, primary amides, secondary amides, secondary bis-amides and blends thereof, may be pre-blended with the matrix polymer.

The relative percentages of the barrier polymer, the matrix polymer and the compatibilizer material depend upon the thicknesses of the respective layers formed at stages 16, 18, which in turn depend upon the extrusion flow rates at extruders 12, 14. The blend input to extruder 14 and the relative rates of extrusion preferably are such that the barrier material in the final closure is in an amount within the range of about 2% to 50% by weight. Most preferably, the amount of barrier polymer in the final output 20 preferably is in the range of about 6% to 35% by weight, the compatibilizer material preferably is in the range of about 1% to 20% by weight, with the balance consisting of the matrix polymer. Increase in the percentage of the barrier material increases the cost of the resulting closure. The amount of compatiblizer material is selected to achieve a desirable amount of bonding between the layers, and to tailor the viscosity of the matrix polymer with which the compatibilizer is blended. It is to be noted in this respect that blending of the compatibilizer with the matrix polymer prior to extrusion eliminates a third extruder that would otherwise be necessary, and also permits the compatibilizer to be employed for tailoring the viscosity of the matrix polymer. It is considered desirable that the melt flow rates of the extrudates input to layer generation stage 16 be as closely matched as possible. Material melt flow rates are published by material manufactures, and can be employed in selecting suitable materials. The viscosities of the separate feed streams must be adequately matched to provide proper layer formation. As taught in U.S. Patent 5,628,950, the melt viscosity difference between the materials of the different layers should be no greater than a factor of five to provide proper layer formation.

FIG. 3 illustrates closure 28 as comprising a base wall 30 from which a peripheral skirt 32 integrally extends. Skirt 32 has internal means, such as an internal thread 34, for securing closure 28 to the finish 36 of a container 38. Closure 28 also preferably includes a tamper-indicating element 40 for indicating potential tampering with the package formed by closure 28 and container 38. Tamper-indicating element 40 may comprise a band frangibly connected to skirt 32 and separable therefrom upon removal of closure 28 from container 38, as disclosed in U.S. Patent 5,755,347 or Re 33,265. Alternatively, tamper-indicating element 40 may be of a type that is frangibly coupled to but remains connected to closure 28 upon removal of the closure from container 38, as illustrated for example in U.S. Patent 5,295,600. An annular lip or ledge 42 is molded integrally with base wall 30 at a position for self-sealing engagement with the inside diameter of container finish 36 for sealing engagement therewith. Alternatively, sealing element 42 may be of the type illustrated in U.S. Patent 5,320,236. Closure 28 illustrated in FIG. 3 thus comprises a so-called linerless closure.

As illustrated in FIG. 4, at least the base wall 30 of closure 28, and preferably also the skirt 32, consists essentially of a multiplicity of layers 43 of matrix polymer material alternating with a multiplicity of layers 44 of barrier material to resist transmission of gases, water vapor and flavorants through the closure. The top and bottom layers preferably consist of matrix materials layers 43. This layered morphology has been shown to provide better barrier properties than conventional material blends. The technique of the present invention can also be used to add a decorative effect by using different colors in each layer. Upon compression molding, the closure will have a random swirl appearance that cannot be achieved employing conventional technology. The number of layers depends upon the construction of layer multiplication generation device 16 and layer multiplication device 18. The number of layers is selected to achieve desired barriers and other properties. The number of layers preferably is at least nine, more preferably at least thirty-three, and most preferably a least one hundred twenty-nine.

A particularly important advantage of the present invention lies in the fact that barrier properties to migration of gases through the closure can be obtained without providing a separate closure liner. However, it is also contemplated in accordance with the present invention that a liner can be provided on the interior surface of closure base wall 30 for sealing engagement with the container finish and/or improved barrier properties. FIG. 5 illustrates a liner 46 that has a thickened periphery for opposed abutment with the sealing surface of a container, while FIG. 6 illustrates a liner 46a of flat geometry. FIG. 7 illustrates a liner 46b having a flat periphery and a thickened midsection for holding additional barrier material. Liner 46, 46a or 46b may be compression molded in situ as illustrated in U.S. Patents 3,674,393, 3,702,148, 3,877,497, 4,518,336 and 5,451,360. Alternatively, but less preferably, the liner may be separately formed and then mechanically or adhesively secured within the closure against the base wall. Liner 46, 46a, 46b may be as disclosed in U.S. Patent 4, 984, 703, or may be disclosed in co-pending European patent applications EP-A-0 926 215 or EP-A-0 926 078 for enhanced barrier properties.

FIG. 8 illustrates a currently preferred closure construction manufactured using the system of FIG. 2. There are separate matrix, compatibilizer and barrier polymer layers 50, 52, 54. The sequence 50, 52, 54, 52, 50, etc. is repeated through the thickness of the closure. Abutting matrix polymer layers 50 tend to flow together and form a matrix layer of double thickness. Layer thicknesses are not shown to scale in any figures. Compatibilizer layers 52 would typically be much thinner than the matrix or barrier layers. Although FIGS. 4 and 8 illustrate symmetrical layer constructions, asymmetrical constructions are also contemplated.

FIG. 9 illustrates a construction in which there are, in sequence, a matrix layer 50, a compatibilizer layer 52, a passive barrier layer 56, a compatibilizer layer 58 (which may be the same composition as layer 52), an active barrier layer 60, a compatibilizer layer 52 and a matrix layer 50. This sequence is repeated through the thickness of the closure. Again, abutting or facing matrix layers 50 tend to flow together. Use of both active and passive barrier layers provides enhanced barrier properties. It is also contemplated that the active and passive polymers may be blended within a single layer, such as a blend of EVOH, nylon and cobalt salt.

It is preferable that the multiple layers that characterize the present invention each be of substantially uniform thickness, although this is not critical because of the multiplicity of layers. It is also preferred that each layer be of uniform composition. It is anticipated that additional layers of other materials exhibiting other desired properties may be employed in certain applications. In manufacture of closures of multi-layer construction, layer orientation in the charge pellet is not critical. This is believed to be due to the fact that the heat and pressure of the compression molding operation causes flow of the layered material radially outwardly so as to reconfigure the layered construction of the pellet even though the layers initially may have been at an angle to the final closure base wall. It is believed that, as long as there is a sufficient number of layers in the extruded pellet and the final closure, the barrier properties of the closure will be achieved without regard to orientation of the layers prior to molding.

There have thus been disclosed a closure and a method of manufacture that fully satisfy the objectives and aims previously set forth. The closure is readily manufactured from otherwise conventional materials and employing otherwise conventional techniques and equipment. The closure provides improved efficiency, in terms of the quantity of barrier material employed versus permeation and transmission of gases such as oxygen and carbon dioxide, water vapor, and essential flavor oils (flavor scalping). Specific matrix/barrier combinations have been disclosed. Other combinations are envisioned for different applications, and will suggest themselves to persons of ordinary skill in the art based upon the principles and parameters herein discussed.

## Claims

1. A plastic closure that comprises: a closure body having a base wall (30) and a peripheral skirt (32) with means (34) on the skirt for securing the closure to a container, wherein at least said base wall of said closure body consisting essentially of matrix polymer material and barrier polymer material that resists transmission of gases, water vapour and flavorants **characterized in that** a multiplicity of alternating matrix material layers (43 or 50) and barrier polymer material layers (44 or 54) in said base wall (30) are oriented generally parallel to the surface of said base wall (30).

2. The closure set forth in claim 1 wherein said closure body includes a compatibilizer material.

3. The closure set forth in claim 2 wherein one or both of said matrix polymer material and said barrier polymer material includes said compatibilizer material.

4. The closure set forth in claim 2 wherein said compatibilizer material is disposed in layers (52) between alternating layers (50, 56) of matrix and barrier polymer materials.

5. The closure set forth in any one of claims 2 to 4 wherein said compatibilizer material is selected from the group consisting of maleic anhydride grafted polymers, ethylene vinyl acetate grafted polymers, ethylene methyl acrylate, ionomers, carboxylic acid grafted polymers, and blends thereof.

6. The closure set forth in any preceding claim wherein said barrier material comprises EVOH, nylon and blends thereof, and said matrix polymer comprises PP.

7. The closure set forth in any one of claims 2 to 6 wherein said matrix polymer material consists essentially of a blend of one or more matrix polymers and said compatibilizer material.

8. The closure set forth in any one of claims 2 to 7 wherein said barrier polymer material is in the range of about 6% to 35% by weight in said closure body, said compatibilizer material is in the range of about 1% to 20% by weight, the balance consisting of said matrix polymer material.

9. The closure set forth in any preceding claim wherein said matrix polymer material is selected from the group consisting of polyolefins, polyesters, polyamides, styrene-based polymers, and mixtures thereof.

10. The closure set forth in claim 9 wherein said matrix polymer material is a polypropylene.

11. The closure set forth in any preceding claim wherein said barrier polymer material is selected from the group consisting of passive barrier polymers, active barrier polymers and mixtures thereof.

12. The closure set forth in claim 11 wherein said barrier polymer material includes a passive barrier polymer.

13. The closure set forth in claim 12, wherein said passive barrier polymer is selected from the group consisting of EVOH, nylon, acrylonitrile copolymers, blends of EVOH and amorphous nylon, nanocomposites of clay in EVOH and/or nylon, blends of EVOH and an ionomer, acrylonitrile, cyclic olefin copolymers, liquid crystal polymers, and blends thereof.

14. The closure set forth in any preceding claim wherein said base wall (30) of said closure body comprises at least nine alternating layers of said matrix polymer and barrier materials.

15. The closure set forth in claim 14 wherein said base wall (30) comprises at least thirty-three alternating layers.

16. The closure set forth in claim 15 wherein said base wall (30) comprises at least one hundred and twenty nine alternating layers.

17. The closure set forth in any preceding claim where sealing means (42) integrally extend from said base wall (30) for sealing engagement with a container finish, and wherein said closure body contains lubricant in the amount of about 0.1% to 1.5% by weight.

18. The closure set forth in claim 17 wherein said lubricant is selected from the group consisting of fatty acid amides, fatty acid esters, microcrystalline waxes, polyethylene glycols, primary amides, secondary amides, secondary-bis amides, and blends thereof.

19. The closure set forth in any preceding claim further comprising a liner (46 or 46a or 46b) on said closure base wall for sealing engagement with a container finish, wherein said liner is compression molded in situ on said base wall (30).

20. A method of making a plastic closure that comprises the steps of:
(a) extruding a pellet (20 or 20a) that consists essentially of matrix polymer material and barrier polymer material that resists transmission of gases, water vapor and flavorants, and
(b) compression molding said pellet to form a closure having a peripheral skirt (32) and a base (30) wall **characterised in that** a multiplicity of alternating matrix material layers (43 or 50) and barrier material layers (44) or (54) in said base wall (30) are oriented generally parallel to the surface of said base wall.

21. The method set forth in claim 20 wherein said polymer material consists essentially of a blend of one or more matrix polymers and a compatibilizer material.

22. The method set forth in claim 20 wherein said step (a) includes the step of extruding a compatibilizer material with said matrix polymer and barrier polymer materials.

23. The method set forth in claim 22 wherein said compatibilizer material is blended with one or both of said matrix polymer and barrier polymer materials prior to extrusion.

24. The method set forth in claim 22 wherein said matrix polymer material, said barrier polymer material and said compatibilizer material are extruded as separate layers (50, 54, 52).

25. The method set forth in claim 24 wherein layers (50, 54) of barrier polymer material and matrix polymer material alternate with each other, and wherein a layer (52) of said compatibilizer material is disposed between each layer of barrier polymer material and each layer of matrix polymer material.

26. The method set forth in any one of claims 21 to 25 wherein said barrier polymer material is in the range of about 6% to 35% by weight in said closure, said compatibilizer material is in the range of about 1% to 20% by weight, the balance consisting of said matrix polymer material.

## Patentansprüche

1. Kunststoffverschluss, umfassend: einen Verschlusskörper mit einer Basiswandung (30) und einer Umfangsringwand (32), mit Mitteln (34) an der Ringwand zum Befestigen des Verschlusses an einem Behälter, wobei mindestens die Basiswandung des Verschlusskörpers im Wesentlichen aus Matrixpolymermaterial und Barrierepolymermaterial, welches einen Widerstand gegenüber dem Durchdringen von Gasen, Wasserdampf und Aromastoffen bietet, besteht,
**dadurch gekennzeichnet, dass**
eine Mehrzahl von abwechselnden Matrixmaterial-Schichten (43 oder 50) und Barrierepolymermaterial-Schichten (44 oder 54) in der Basiswandung (30) allgemein parallel zu der Oberfläche der Basiswandung (30) ausgerichtet ist.

2. Verschluss nach Anspruch 1,
bei welchem der Verschlusskörper ein Kompatibilisierungsmaterial enthält.

3. Verschluss nach Anspruch 2,
bei welchem das Matrixpolymermaterial oder das Barrierepolymermaterial oder beide das Kompatibilisierungsmaterial enthalten.

4. Verschluss nach Anspruch 2,
bei welchem das Kompatibilisierungsmaterial in Schichten (52) zwischen abwechselnden Schichten (50, 56) aus Matrix- und Barrierepolymermaterialien angeordnet ist.

5. Verschluss nach einem der Ansprüche 2 bis 4,
bei welchem das Kompatibilisierungsmaterial aus der Gruppe ausgewählt ist, die aus mit Maleinanhydrid gepfropften Polymeren, mit Ethylenvinylacetat gepfropften Polymeren, Ethylenmethylacrylat, Ionomeren, mit Carboxylsäure gepfropften Polymeren und Mischungen dieser besteht.

6. Verschluss nach einem der vorhergehenden Ansprüche,
bei welchem das Barrierematerial EVOH, Nylon und Mischungen dieser umfasst und das Matrixpolymer PP umfasst.

7. Verschluss nach einem der Ansprüche 2 bis 6,
bei welchem das Matrixpolymermaterial im Wesentlichen aus einer Mischung aus einem oder mehreren Matrixpolymeren und dem Kompatibilisierungsmaterial besteht.

8. Verschluss nach einem der Ansprüche 2 bis 7,
bei welchem das Barrierepolymermaterial im Bereich von etwa 6 bis 35 Gew.-% in dem Verschlusskörper enthalten ist, das Kompatibilisierungsmaterial im Bereich von etwa 1 bis 20 Gew.-%, wobei der Rest aus dem Matrixpolymermaterial besteht.

9. Verschluss nach einem der vorhergehenden Ansprüche,
bei welchem das Matrixpolymermaterial aus der Gruppe ausgewählt ist, die aus Polyolefinen, Polyestern, Polyamiden, Polymeren auf Styren-Basis und Mischungen dieser besteht.

10. Verschluss nach Anspruch 9,
bei welchem das Matrixpolymermaterial ein Polypropylen ist.

11. Verschluss nach einem der vorhergehenden Ansprüche,
bei welchem das Barrierepolymermaterial aus der Gruppe ausgewählt ist, die aus passiven Barrierepolymeren, aktiven Barrierepolymeren und Mischungen dieser besteht.

12. Verschluss nach Anspruch 11,
bei welchem das Barrierepolymermaterial ein passives Barrierepolymer enthält.

13. Verschluss nach Anspruch 12,
bei welchem das passive Barrierepolymer aus der Gruppe ausgewählt ist, die aus EVOH, Nylon, Acrylnitril-Copolymeren, Mischungen aus EVOH und amorphem Nylon, Nanokompositen aus Ton in EVOH und/oder Nylon, Mischungen aus EVOH und einem Ionomer, Acrylnitril, zyklischen Olefin-Copolymeren, Flüssigkristallpolymeren und Mischungen dieser besteht.

14. Verschluss nach einem der vorhergehenden Ansprüche,
bei welchem die Basiswandung (30) des Verschlusskörpers mindestens neun abwechselnde Schichten aus dem Matrixpolymer- und dem Barrierematerial umfasst.

15. Verschluss nach Anspruch 14,
bei welchem die Basiswandung (30) mindestens dreiunddreißig abwechselnde Schichten umfasst.

16. Verschluss nach Anspruch 15,
bei welchem die Basiswandung (30) mindestens einhundertneunundzwanzig abwechselnde Schichten umfasst.

17. Verschluss nach einem der vorhergehenden Ansprüche,
bei welchem sich Abdichtmittel (42) zur abdichtenden Anlage am Ende eines Behälters integral von der Basiswandung (30) aus erstrecken und wobei der Verschlusskörper Gleitmittel in einer Menge von etwa 0,1 bis 1,5 Gew.-% enthält.

18. Verschluss nach Anspruch 17,
bei welchem das Gleitmittel aus der Gruppe ausgewählt ist, die aus Fettsäureamiden, Fettsäureestern, mikrokristallinen Wachsen, Polyethylenglykolen, primären Amiden, sekundären Amiden, sekundären Bi-Amiden und Mischungen dieser besteht.

19. Verschluss nach einem der vorhergehenden Ansprüche,
der ferner eine Einlage (46 oder 46a oder 46b) auf der Basiswandung des Verschlusses zur abdichtenden Anlage am Ende eines Behälters umfasst, wobei die Einlage an Ort und Stelle auf die Basiswandung (30) formgepresst wird.

20. Verfahren zum Herstellen eines Kunststoffverschlusses, das folgende Schritte umfasst:
(a) Extrudieren eines Pellets (20 oder 20a), das im Wesentlichen aus Matrixpolymermaterial und Barrierepolymermaterial, welches einen Widerstand gegenüber dem Durchdringen von Gasen, Wasserdampf und Aromastoffen bietet, besteht, und
(b) Formpressen des Pellets, um einen Verschluss auszubilden, der eine Umfangsringwand (32) und eine Basiswandung (30) umfasst,
**dadurch gekennzeichnet, dass**
eine Mehrzahl von abwechselnden Matrixmaterial-Schichten (43 oder 50) und Barrierepolymermaterial-Schichten (44 oder 54) in der Basiswandung (30) allgemein parallel zu der Oberfläche der Basiswandung ausgerichtet ist.

21. Verfahren nach Anspruch 20,
bei welchem das Polymermaterial im Wesentlichen aus einer Mischung aus einem oder mehreren Matrixpolymeren und einem Kompatibilisierungsmaterial besteht.

22. Verfahren nach Anspruch 20,
bei welchem der Schritt (a) den Schritt umfasst, ein Kompatibilisierungsmaterial mit dem Matrixpolymer- und dem Barrierepolymermaterial zu extrudieren.

23. Verfahren nach Anspruch 22,
bei welchem das Kompatibilisierungsmaterial vor der Extrusion mit dem Matrixpolymer- oder dem Barrierepolymermaterial oder beiden gemischt wird.

24. Verfahren nach Anspruch 22,
bei welchem das Matrixpolymermaterial, das Barrierepolymermaterial und das Kompatibilisierungsmaterial als separate Schichten (50, 54, 52) extrudiert werden.

25. Verfahren nach Anspruch 24,
bei welchem Schichten (50, 54) aus Barrierepolymermaterial und Matrixpolymermaterial einander abwechseln und wobei eine Schicht (52) des Kompatibilisierungsmaterials zwischen jeder Schicht aus Barrierepolymermaterial und jeder Schicht aus Matrixpolymermaterial angeordnet ist.

26. Verfahren nach einem der Ansprüche 21 bis 25,
bei welchem das Barrierepolymermaterial im Bereich von etwa 6 bis 35 Gew.-% in dem Verschluss enthalten ist, das Kompatibilisierungsmaterial im Bereich von etwa 1 bis 20 Gew.-%, wobei der Rest aus dem Matrixpolymermaterial besteht.

## Revendications

1. Bouchon en plastique comprenant un corps de bouchon qui comporte une paroi de base (30) et une jupe périphérique (32), laquelle jupe porte des moyens (34) qui permettent de fixer le bouchon sur un récipient, dans lequel bouchon au moins ladite paroi de base dudit corps de bouchon est essentiellement constituée d'un matériau polymère de matrice et d'un matériau polymère de barrière, qui fait obstacle à la transmission des gaz, de la vapeur d'eau et des arômes, **caractérisé en ce qu'**il y a, dans ladite paroi de base (30), de multiples couches de matériau de matrice (43 ou 50) et de multiples couches de matériau polymère de barrière (44 ou 54) qui sont disposées en alternance et orientées de manière globalement parallèle à la surface de ladite paroi de base (30).

2. Bouchon conforme à la revendication 1, dans lequel ledit corps de bouchon contient un matériau compatibilisant.

3. Bouchon conforme à la revendication 2, dans lequel ledit matériau compatibilisant est contenu dans l'un desdits matériaux polymères, de matrice ou de barrière, ou dans les deux.

4. Bouchon conforme à la revendication 2, dans lequel ledit matériau compatibilisant est disposé en couches (52) placées entre les couches alternantes (50, 56) des matériaux polymères de matrice et de barrière.

5. Bouchon conforme à l'une des revendications 2 à 4, dans lequel ledit matériau compatibilisant est choisi dans l'ensemble que constituent les polymères de greffage d'anhydride maléique, les polymères de greffage d'éthylène et d'acétate de vinyle, les polymères d'éthylène et d'acrylate de méthyle, les ionomères et les polymères de greffage d'acide carboxylique, ainsi que leurs mélanges.

6. Bouchon conforme à l'une des revendications précédentes, dans lequel ledit matériau de barrière comprend un EVOH ou poly(éthylène/alcool vinylique), un nylon ou un mélange de tels polymères, et ledit polymère de matrice comprend du polypropylène.

7. Bouchon conforme à l'une des revendications 2 à 6, dans lequel ledit matériau polymère de matrice consiste pour l'essentiel en un mélange d'un ou plusieurs polymères de matrice et dudit matériau compatibilisant.

8. Bouchon conforme à l'une des revendications 2 à 7, dans lequel ledit matériau polymère de barrière représente à peu près 6 à 35 % du poids dudit corps de bouchon, ledit matériau compatibilisant représente à peu près 1 à 20 % de ce poids, et le reste est constitué dudit matériau polymère de matrice.

9. Bouchon conforme à l'une des revendications précédentes, dans lequel ledit matériau polymère de matrice est choisi dans l'ensemble formé par les polyoléfines, polyesters, polyamides et polymères à base de styrène, ainsi que leurs mélanges.

10. Bouchon conforme à la revendication 9, dans lequel ledit matériau polymère de matrice est un polypropylène.

11. Bouchon conforme à l'une des revendications précédentes, dans lequel ledit matériau polymère de barrière est choisi dans l'ensemble formé par les polymères de barrière passifs, les polymères de barrière actifs, et leurs mélanges.

12. Bouchon conforme à la revendication 11, dans lequel ledit matériau polymère de barrière comprend un polymère de barrière passif.

13. Bouchon conforme à la revendication 12, dans lequel ledit polymère de barrière passif est choisi dans l'ensemble formé par les EVOH, nylons, copolymères d'acrylonitrile, mélanges d'EVOH et de nylon amorphe, nanocomposites d'argile dans un EVOH et/ou un nylon, mélanges d'un EVOH et d'un ionomère, polyacrylonitrile, copolymères d'oléfines cycliques et polymères à cristaux liquides, ainsi que leurs mélanges.

14. Bouchon conforme à l'une des revendications précédentes, dans lequel ladite paroi de base (30) dudit corps de bouchon comprend au moins neuf couches alternantes desdits matériaux polymères de matrice et de barrière.

15. Bouchon conforme à la revendication 14, dans lequel ladite paroi de base (30) comprend au moins 33 couches alternantes.

16. Bouchon conforme à la revendication 15, dans lequel ladite paroi de base (30) comprend au moins 129 couches alternantes.

17. Bouchon conforme à l'une des revendications précédentes, dans lequel des moyens d'étanchéité (42) s'étendent d'un seul tenant depuis ladite paroi de base (30) et servent à assurer l'étanchéité en coopération avec la bague de col d'un récipient, et dans lequel ledit corps de bouchon contient à peu près de 0,1 à 1,5 % en poids d'un lubrifiant.

18. Bouchon conforme à la revendication 17, dans lequel ledit lubrifiant est choisi dans l'ensemble formé par les amides d'acide gras, esters d'acide gras, cires microcristallines, polyéthylène-glycols, amides primaires, amides secondaires et bis(amide secondaire), ainsi que leurs mélanges.

19. Bouchon conforme à l'une des revendications précédentes, qui comporte en outre une doublure (46, 46a ou 46b) placée sur ladite paroi de base et servant à assurer l'étanchéité en coopération avec la bague de col d'un récipient, et dans lequel cette doublure est formée in situ par moulage par compression sur ladite paroi de base (30).

20. Procédé de fabrication d'un bouchon en matière plastique, comportant les étapes suivantes :
a) obtenir par extrusion une pastille (20 ou 20a) essentiellement constituée d'un matériau polymère de matrice et d'un matériau polymère de barrière, qui fait obstacle à la transmission des gaz, de la vapeur d'eau et des arômes,
b) et mouler cette pastille par compression, pour en faire un bouchon comportant une jupe périphérique (32) et une paroi de base (30),
**caractérisé en ce que**, dans ladite paroi de base (30), de multiples couches de matériau de matrice (43 ou 50) et de multiples couches de matériau de barrière (44 ou 54) sont disposées en alternance et orientées de manière globalement parallèle à la surface de ladite paroi de base.

21. Procédé conforme à la revendication 20, dans lequel ledit matériau polymère de matrice est essentiellement constitué d'un mélange d'un ou plusieurs polymères de matrice et d'un matériau compatibilisant.

22. Procédé conforme à la revendication 20, dans lequel l'étape (a) comporte le fait d'extruder un matériau compatibilisant avec lesdits matériaux polymères de matrice et de barrière.

23. Procédé conforme à la revendication 22, dans lequel on mélange, avant extrusion,. ledit matériau compatibilisant avec l'un desdits matériaux polymères de matrice et de barrière, ou les deux.

24. Procédé conforme à la revendication 22, dans lequel ledit matériau polymère de matrice, ledit matériau polymère de barrière et ledit matériau compatibilisant sont extrudés de manière à former des couches distinctes (50, 54, 52).

25. Procédé conforme à la revendication 24, dans lequel les couches (50, 54) de matériau polymère de barrière et de matériau polymère de matrice alternent les unes avec les autres, et une couche (52) de matériau compatibilisant est disposée entre chaque couche de matériau polymère de barrière et chaque couche de matériau polymère de matrice.

26. Procédé conforme à l'une des revendications 21 à 25, dans lequel ledit matériau polymère de barrière représente à peu près 6 à 35 % du poids dudit bouchon, ledit matériau compatibilisant représente à peu près 1 à 20 % de ce poids, et le reste est constitué dudit matériau polymère de matrice.
